# FASCICULE DE BREVET EUROPEEN

(11) **EP 4 288 308 B1**
(45) Date de publication et mention de la délivrance du brevet: **16.09.2026**
(21) Numéro de dépôt: 22708795.4
(22) Date de dépôt: 07.02.2022
(51) Int. Cl.: B60R 21/203, B60R 1/00

(54) **DISPOSITIF DE RETENUE D'UN MODULE DE SÉCURITÉ DE VOLANT DE VÉHICULE**
FAHRZEUGLENKRAD-SICHERHEITSMODULHALTER
DEVICE FOR RETAINING A VEHICLE STEERING WHEEL SAFETY MODULE

(30) Priorité: 08.02.2021 FR 2101188
(43) Date de publication de la demande: 13.12.2023
(73) Titulaire: Autoliv Development AB, 447 83 Vårgårda (SE)
(72) Inventeur: DOURSOUX, Hugues, 76440 Serqueux (FR)
(74) Mandataire: Poindron, Cyrille
(86) Numéro de dépôt international: PCT/EP2022/052817
(87) Numéro de publication internationale: WO 2022/167632

(56) Documents cités:
- EP-A1- 1 179 457
- EP-A1- 3 650 289
- WO-A1-2020/120731
- DE-U1- 20 017 527
- KR-A- 20000 045 838
- US-A1- 2003 178 825

## Description

### Domaine technique de l'invention

La présente invention concerne de manière générale un dispositif de retenue d'un module de sécurité sur un volant de véhicule automobile.

### État de la technique

Il est connu dans l'art antérieur des dispositifs de retenue d'un module de sécurité sur un volant de véhicule automobile, tel que celui divulgué par exemple dans le document WO2009/048055, et qui comprend typiquement un organe élastique (un jonc élastique) agencé pour occuper une position de retenue avec des organes d'accrochage (des crochets par exemple) pour retenir le module de sécurité. Pour monter le module de sécurité sur le volant, des pistes de guidages sont prévues sur les organes d'accrochage pour déformer progressivement l'organe élastique en flexion afin de lui faire passer un point en saillie correspondant au pic du crochet, avant que l'organe élastique ne puisse se détendre pour occuper la position de retenue. Il est important de garantir les efforts les plus faibles possibles lors du montage pour diminuer les contraintes d'assemblage, et réduire la pénibilité de ces opérations d'assemblage.

De plus, il est connu de former les organes d'accrochage en matière plastique ou en polymère, pour les intégrer directement au boîtier du module de sécurité. Au vu des efforts exercés sur ces organes d'accrochage, il peut être nécessaire de prévoir des largeurs ou des sections importantes. Cependant, en raison des encombrements, cela peut revenir à diminuer ou mal maîtriser des bras de levier agissant sur la flexion de l'organe élastique lors du montage, ce qui peut conduire à augmenter les efforts à appliquer lors du montage. En particulier, le document ci-dessus ne propose aucune solution pour garantir des efforts aussi réduits que possible et/ou dont l'augmentation au cours du mouvement de montage est maîtrisée.

**Le** document EP1179457A1 divulgue figure 2 des crochets 6A, 6B formant un organe d'accrochage et divulgue figure 3 un jonc 19 formant un organe élastique prévu pour s'engager avec les crochets 6A et 6B. Lors de l'accouplement entre ces pièces, le jonc 19 doit glisser sur la pente inclinée et nervurée des crochets 6A, 6B. Le point de contact entre le jonc 19 et chacun des crochets 6A et 6B se situe sur la nervure qui forme le côté ou le flanc des crochets 6A, 6B qui se situe vers la portion déformable ou qui fléchit du jonc 19. En conséquence, un effort de résistance à l'accouplement important est exercé par le jonc 19 sur les crochets 6A, 6B. WO2020120731A1 montre un dispositif de retenue selon le préambule de la revendication 1. KR20000045838A et DE20017527U montrent des organes d'accrochage avec deux côtés.

### Exposé de l'invention

Un but de la présente invention est de répondre aux inconvénients de l'art antérieur mentionnés ci-dessus et en particulier, tout d'abord, de proposer un dispositif de retenu comprenant un organe d'accrochage et un organe élastique à déformer lors d'un mouvement de montage, avec des efforts de montages aussi faibles que possible, et/ou dont l'augmentation au cours du mouvement de montage est maîtrisée.

Pour cela un premier aspect de l'invention concerne un dispositif de retenue d'un module de sécurité embarqué sur une structure de volant de véhicule, avec les caractéristiques de la revendication 1, c'est-à-dire comprenant notamment :
- au moins un organe d'accrochage, tel qu'un crochet, solidaire de l'un du module de sécurité ou de la structure de volant,
- au moins un organe élastique, solidaire de l'autre du module de sécurité ou de la structure de volant, et agencé pour être engagé avec l'organe d'accrochage de sorte à retenir le module de sécurité sur la structure de volant,

l'organe élastique comprenant une portion de contact agencée pour, lors d'un mouvement de montage du module de sécurité sur la structure de volant, entrer en contact avec une piste de guidage agencée sur une face
d'actionnement de l'organe d'accrochage située en regard de l'organe élastique,
la piste de guidage étant agencée pour déformer l'organe élastique jusqu'à une position dégagée de l'organe d'accrochage, lors du mouvement de montage effectué selon une direction de montage,
caractérisé en ce que la piste de guidage est agencée d'un premier côté de l'organe d'accrochage, et en ce que la face d'actionnement présente au moins un dégagement agencé entre la piste de guidage et un deuxième côté de l'organe d'accrochage.

Selon la mise en œuvre ci-dessus, la face d'actionnement est la face de l'organe d'accrochage qui est en regard de l'organe élastique lors du mouvement de montage. Il s'agit typiquement d'une surface inclinée par rapport à la direction de montage, pour escamoter ou déplacer automatiquement l'organe élastique de sorte à « passer » une saillie qui sépare la face d'actionnement d'une portion d'accueil qui reçoit l'organe élastique pour qu'il occupe une position de retenue dans laquelle il peut s'engager avec l'organe d'accrochage. La face d'actionnement comprend une piste de guidage qui est typiquement la partie de la face d'actionnement sur laquelle l'organe élastique va être en contact et glisser au cours du mouvement de montage, et la face d'actionnement comprend aussi un dégagement, c'est-à-dire un décrochement, une pente, un creux, qui garantit que l'organe élastique ne contacte pas d'autre portion de la face d'actionnement. Ainsi, le contact entre la piste de guidage et l'organe élastique reste bien du premier côté de l'organe d'accrochage, ce qui garantit que l'effort nécessaire pour déplacer l'organe élastique (typiquement déformé en flexion) reste celui qui est prévu.

Selon un mode de réalisation, le dégagement peut être défini pour laisser un jeu strictement positif entre l'organe élastique et le reste de la face d'actionnement, et en particulier avec le deuxième côté de l'organe d'accrochage lors du mouvement de montage. Autrement dit tout au long du montage, aucun contact parasite entre l'organe d'accrochage et l'organe élastique et en dehors de la piste de guidage n'intervient.

Selon un mode de réalisation, dans un plan de coupe, de préférence normal à la direction de montage, et selon une direction définie par un effort exercé par l'organe élastique sur l'organe d'accrochage, le premier côté peut présenter une première longueur, supérieure à une deuxième longueur du deuxième côté. Typiquement, l'organe d'accrochage présente une section transversale asymétrique.

Selon un mode de réalisation, dans au moins un plan de coupe, de préférence normal à la direction de montage, l'organe d'accrochage peut présenter une section en H, avec une première aile du H agencée du premier côté et une deuxième aile du H agencée du deuxième côté, la première aile pouvant présenter une première longueur supérieure à la deuxième longueur de la deuxième aile.

Selon l'invention, l'organe élastique comprend peut une portion déformable reliée à la portion de contact, et le deuxième coté peut être agencé entre la portion déformable et le premier côté. Cette mise en oeuvre procure la garantie que le bras de levier entre la portion déformable et le point de contact entre l'organe d'accrochage et l'organe élastique est le plus grand possible, ce qui procure le plus faible effort de flexion possible pour déformer l'organe élastique.

Selon le mode de réalisation ci-dessus, l'organe élastique peut comprendre une portion déformable reliée à la portion de contact, et le deuxième coté peut être agencé entre la portion déformable et le premier côté. C'est-à-dire que l'organe élastique peut comprendre une extrémité libre reliée à la portion de contact, et le premier côté peut être agencé entre l'extrémité libre et le deuxième côté. Autrement dit, l'organe élastique peut comprendre une extrémité libre opposée à la portion déformable, et le dégagement est prévu pour garantir que le point de contact entre l'organe élastique et l'organe d'accrochage reste bien du côté de l'extrémité libre (pour conserver un effort de flexion de l'organe élastique le plus faible possible).

Selon un mode de réalisation, le dégagement est agencé entre la piste de contact et la portion de l'organe élastique qui se déforme et/ou qui génère la force de rappel de l'organe élastique en position de verrouillage.

Selon un mode de réalisation, lors du mouvement de montage, une distance entre la portion déformable et le point de contact entre la piste de contact et la portion de contact peut être inférieure à 40 mm.

Selon un mode de réalisation, l'organe élastique peut être agencé pour être déformé en flexion lors du mouvement de montage, et la direction de flexion ou de déplacement peut être normale à la direction de montage.

Selon un mode de réalisation, dans un plan comprenant la direction de montage, et normal à la direction de déplacement de la portion de l'organe élastique en contact avec la piste de guidage lors du mouvement de montage, le premier côté et le deuxième côté peuvent définir deux bords latéraux de l'organe d'accrochage.

Selon un mode de réalisation, le premier côté et le deuxième côté peuvent appartenir ou être adjacents à deux faces latérales de l'organe d'accrochage sensiblement parallèles à un plan comprenant la direction de montage et la direction de déplacement de la portion de l'organe élastique en contact avec la piste de guidage lors du mouvement de montage.

Selon un mode de réalisation, l'organe d'accrochage peut comprendre deux nervures, et la piste de guidage peut être formée sur une seule des deux nervures. Ménager de telles nervures permet d'obtenir une structure de l'organe d'accrochage légère et aisée à fabriquer par exemple par moulage ou injection moulage, tout en étant résistante aux efforts subis lors du montage ou lors de la retenue du module de sécurité.

Selon un mode de réalisation, l'organe d'accrochage peut être formé en matière plastique et/ou en polymère. De telles matière impliquent que l'organe d'accrochage doit présenter des dimensions importantes (par exemple au moins 5 mm, de préférence au moins 8 mm) entre le premier côté et le deuxième côté pour être suffisamment robuste. En conséquence, des contacts parasites au niveau par exemple du deuxième côté entraîneraient des variations importantes des bras de levier et des efforts, et le dégagement prévu sur la face d'actionnement évite qu'une telle situation se produise.

Selon un mode de réalisation, l'organe d'accrochage peut être formé par un procédé de moulage par injection.

Selon un mode de réalisation, l'organe d'accrochage peut être solidaire du module de sécurité, et de préférence peut être formé de manière monolithique ou d'un seul tenant avec un boîtier du module de sécurité. Une telle mise en oeuvre permet de réduire les coûts de fabrication.

Selon un mode de réalisation, l'organe d'accrochage peut être rapporté sur le boîtier du module de sécurité, par exemple par surmoulage ou sertissage. Cela permet plus de libertés dans le choix des matériaux et procédés pour optimiser la résistance ou le coût de fabrication. En particulier, cette mise en œuvre pour l'organe d'accrochage permet de combiner le choix d'un premier plastique approprié pour répondre à des contraintes spécifiques au boîtier (souplesse, résistance aux UV,../), et d'un deuxième plastique approprié pour répondre à des contraintes spécifiques à l'organe d'accrochage (résistance aux efforts de l'organe élastique, avec un taux particulier de fibres de renfort, avec un coefficient de frottement particulier...). Il est à noter que par exemple pour le cas d'un surmoulage, on peut considérer que l'ensemble boîtier - organe d'accrochage reste d'un seul tenant.

Selon un mode de réalisation, la piste de guidage peut être agencée pour procurer un contact linéaire ou de préférence ponctuel avec la portion de contact.

Selon un mode de réalisation, le dispositif de retenue peut comprendre deux organes d'accrochage et un ou deux organes élastiques

Selon un mode de réalisation, la direction de montage peut être comprise dans un plan médian comprenant une droite parallèle à une direction de déplacement de la portion de contact et normale à la direction de montage, et le premier côté et le deuxième côté de l'organe d'accrochage sont agencés de part et d'autre du plan médian.

Selon un mode de réalisation, le dégagement peut être agencé pour garantir que, lors du mouvement de montage, le point de contact entre la piste de contact et la portion de contact puisse rester dans une zone prédéterminée de l'organe d'accrochage.

Selon un mode de réalisation, le dégagement peut être agencé pour garantir que, lors du mouvement de montage, le point de contact entre la piste de contact et la portion de contact puisse présenter une trajectoire rectiligne.

Selon un mode de réalisation, le dégagement peut être agencé pour garantir que, lors du mouvement de montage, le point de contact entre la piste de contact et la portion de contact ne se rapproche pas du deuxième côté.

Selon un mode de réalisation, le dégagement peut être agencé pour garantir que, lors du mouvement de montage, le point de contact entre la piste de contact et la portion de contact puisse rester à une distance constante ou puisse s'éloigner d'une zone de déformation de l'organe élastique.

Selon un mode de réalisation, le dégagement peut être agencé pour garantir que, lors du mouvement de montage, le point de contact entre la piste de contact et la portion de contact puisse définir un bras de levier sur l'organe élastique constant ou qui augmente au cours du mouvement de montage.

Selon un mode de réalisation, le dégagement peut être agencé pour garantir que, lors du mouvement de montage, le point de contact entre la piste de contact et la portion de contact puisse définir une longueur de flexion sur l'organe élastique constante ou qui augmente au cours du mouvement de montage.

Selon un mode de réalisation, la piste de guidage peut être agencée uniquement du premier côté de l'organe d'accrochage.

Selon un mode de réalisation, la piste de guidage peut être agencée sur une première moitié de l'organe d'accrochage.

Selon un mode de réalisation, la piste de guidage peut présenter, selon la direction de montage, une largeur inférieure à une épaisseur ou un diamètre de l'organe élastique, et de préférence inférieure à la moitié de l'épaisseur ou du diamètre de l'organe élastique.

Selon un mode de réalisation, la piste de guidage peut présenter, selon la direction de montage, une largeur inférieure à 5 mm, de préférence inférieure à 4 mm.

Selon un mode de réalisation, le dégagement peut être défini pour laisser un jeu strictement positif entre l'organe élastique et tout le reste de la face d'actionnement.

Selon un mode de réalisation, l'organe d'accrochage peut être un crochet.

Selon un mode de réalisation, la face d'actionnement de l'organe d'accrochage peut être une face inclinée par rapport à la direction de montage et débouchant sur un rebord ou un talon.

Un deuxième aspect de l'invention se rapporte à un volant de véhicule, selon la revendication 13, comprenant un dispositif de retenue selon le premier aspect de l'invention.

Un troisième aspect de l'invention se rapporte à un véhicule automobile, selon la revendication 14, comprenant un volant de véhicule selon le deuxième aspect de l'invention.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue éclatée d'un volant comprenant une structure de volant, un module de sécurité et un dispositif de retenue du module de sécurité sur la structure de volant selon l'invention,
[fig. 2] représente une vue de côté d'un organe d'accrochage et d'un organe élastique du dispositif de retenue de la figure 1 ;
[fig. 3] représente une vue de dessus en coupe du dispositif de retenue de la figure 1, avec en partie gauche l'organe élastique du dispositif de retenue de la figure 1 dans une position de retenue, et en partie droite l'organe élastique du dispositif de retenue de la figure 1 dans une position dégagée ou en cours de montage du module de sécurité de la figure 1 ;
[fig. 4] représente une vue en perspective de l'organe d'accrochage du dispositif de retenue de la figure 1.

### Description détaillée de mode(s) de réalisation

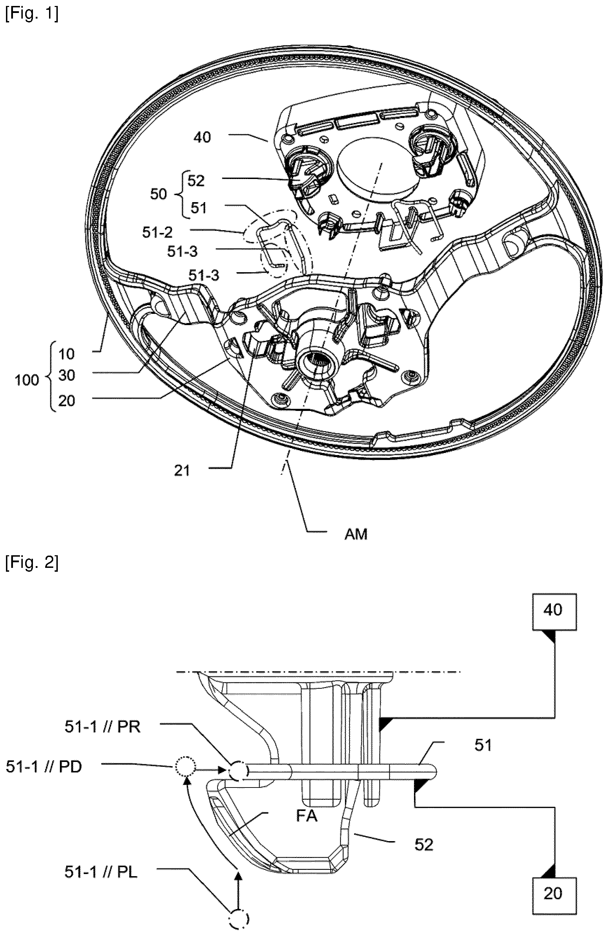

La figure 1 représente un volant de véhicule comprenant de manière générale une jante 10 reliée à un moyeu 20 par des branches 30. Un module de sécurité 40 est prévu pour être monté sur le moyeu 20 et comprend typiquement un coussin gonflable ou airbag. De manière classique, le volant de véhicule est monté sur une colonne ou un boîtier de direction pour pouvoir pivoter autour d'un axe de moyeu AM.

Le module de sécurité 40 doit être retenu sur le moyeu 20 tout en pouvant par exemple être mobile par rapport au moyeu 20 pour actionner un avertisseur sonore (par exemple selon la direction de l'axe AM, ou une autre direction), et le volant de véhicule comprend à cet effet un dispositif de retenue 50 formé notamment par :
- deux crochets 52 solidaires du module de sécurité 40 et agencée pour passer au moins partiellement au travers de trous de passage 21 ménagés dans le moyeu 20,
- deux joncs élastiques 51 solidaires du moyeu 20 et agencés en regard de chaque trou de passage 21 pour s'engager avec un des crochets 52.

Comme le montre la figure 1, chaque jonc élastique 51 comprend une portion de contact 51-1, agencée pour entrer en contact avec le crochet 52 du module de sécurité 40, une portion de déformation 51-2, qui permet au jonc élastique de se déformer notamment lors du montage, et aussi de maintenir et ramener la portion de contact 51-1 dans la position de retenue, et une portion d'ancrage 51-3, qui sera engagée ou fixée avec le moyeu 20.

En ce qui concerne les crochets 52, ils sont formés directement sur le boîtier du module de sécurité 40, et peuvent être formés dans une matière plastique (par exemple du polyamide, de préférence avec un matériau de charge comme des fibres de verre). On peut prévoir comme le montre la figure 1 de former les crochets 52 avec des nervures, pour faciliter les opérations de moulage (meilleur refroidissement, moins de déformations ou de retrait...).

En d'autres termes, le moyeu 20 forme une structure du volant 100, sur laquelle le module de sécurité 40 peut être retenu par un organe élastique (le(s) jonc(s) élastique(s) 51) agencé pour être engagé avec un organe d'accrochage (le(s) crochet(s) 52).

Comme le montre la figure 2, une fois le module de sécurité 40 monté sur le moyeu 20 : chaque jonc élastique 51 (solidaire du moyeu 20) peut empêcher tout mouvement du crochet 52 (solidaire du module de sécurité 40) vers le haut de la figure 2. Dans la figure 2, la partie du jonc élastique 51 engagée avec le crochet 52 occupe une position de retenue PR, occupée de manière naturelle.

On peut aussi noter figure 2 qui montre le crochet 52 vu de côté que ce dernier présente une face d'actionnement FA inclinée par rapport à la verticale de la figure 2 pour permettre un montage du module de sécurité 40 sur le moyeu 20.

En effet, avant le montage du module de sécurité 40, donc avant d'occuper la position de retenue PR engagée avec le crochet 52, la portion de contact 51-1 en traits mixtes fins montrée en bas de la figure 2 du jonc élastique 51 occupe la position libre PL, et barre le passage du crochet 52 avant le montage. Pour autoriser le montage, la face d'actionnement FA du crochet 52 est agencée pour déformer le jonc élastique 51 lors d'un mouvement relatif vertical entre les deux pièces, pour que la portion de contact 51-1 du jonc élastique 51 se déplace comme le montrent les flèches de la figure 2, jusqu'à la position dégagée PD, pour ensuite être automatiquement ramenée en position de retenue PR en raison de l'effort de rappel élastique exercé par le reste du jonc élastique (en particulier la portion de déformation 51-2 déformée et mise en tension pendant le déplacement de la portion de contact 51-1. Il faut noter toutefois que la portion de contact 51-1 et même la portion d'ancrage 51-3 peuvent aussi se déformer et participer au rappel en position de retenue PR).

Dans cette mise en œuvre, pour effectuer le montage, le module de sécurité 40 est déplacé selon une direction de montage qui est parallèle à l'axe de moyeu AM, mais on peut envisager d'autres directions de montage.

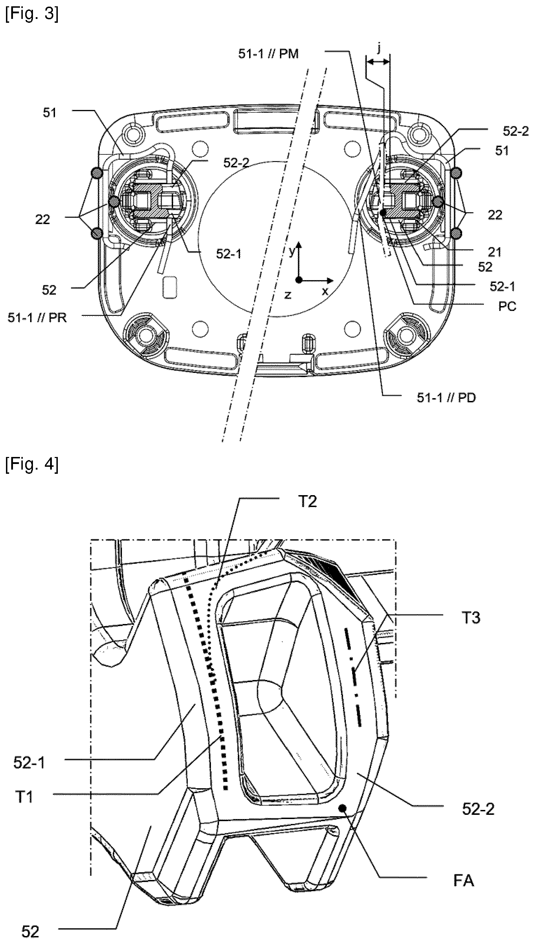

La figure 3 représente une vue de dessus en coupe du dispositif retenue de la figure 1, avec en partie gauche, le jonc élastique 51 dans une position de retenue PR. En effet, la partie gauche représente le volant de véhicule avec le module de sécurité monté, c'est-à-dire avec le jonc élastique 51 engagé sous le crochet 52, pour le retenir. On peut noter que le jonc élastique est maintenu solidaire du moyeu 20 par trois portions d'attache 22 du moyeu 20, engagées avec la portion d'ancrage 51-3 du jonc élastique 51.

La partie droite de la figure 3 représente le volant de véhicule avec le module de sécurité 40 en cours de montage. Dans cette figure 3, la direction de montage (parallèle à l'axe de moyeu AM, c'est-à-dire l'ace z) est normale au plan de la figure 3. La figure 3 montre le montage en particulier lorsque la portion de contact 51-1 est en position dégagée PD. Dans cette position dégagée PD, aucune partie de la portion de contact 51-1 représentée en traits pleins ne fait obstacle à la face d'actionnement FA, si bien que le crochet 52 peut librement passer dans le trou de passage 21 (à noter qu'un jeu est représenté entre la portion de contact 51-1 en traits pleins et le crochet 52 pour des raisons de clarté, bien que dans la réalité, il n'y ait pas de jeu).

De plus, en traits mixtes fins, la portion de contact 51-1 est représentée à un instant quelconque du montage, dans une position de montage PM.

A ce moment, la portion de contact 51-1 est en contact avec la face d'actionnement FA au niveau d'un point de contact PC.

Selon l'invention, ce point de contact PC est situé sur une piste de guidage agencée sur un premier côté 52-1 du crochet 52, et de manière préférée sur le côté du crochet 52 le plus éloigné de la portion de déformation 51-2 du jonc élastique 51. Autrement dit, le point de contact PC est situé le plus proche possible de l'extrémité libre du jonc élastique 51. En conséquence, le bras de levier généré entre le point de contact PC et la portion de déformation 51-2 (pour déformer le jonc élastique 51) est le plus grand possible, ce qui garantit un effort de montage minimal.

Par ailleurs, afin de garantir qu'aucun contact parasite entre le jonc élastique 51 et le reste de la face d'actionnement FA ne se produise lors du montage, la face d'actionnement FA comprend un dégagement entre le premier côté 52-1 du crochet 52 et un deuxième côté 52-2 du crochet 52. Dans le plan de coupe de la figure 3, normal à la direction de montage (axe de moyeu AM, ou axe z de la figure 3), on peut remarquer que le crochet 52 présente selon la direction x une première longueur du premier côté supérieure à une deuxième longueur du deuxième côté 52-2.

En conséquence, on peut relever un jeu j entre la portion de contact 51-1 et n'importe quel point de la face d'actionnement autre que le point de contact PC de la piste de guidage (ici, le jeu j est indiqué positif au niveau d deuxième côté 52-2, mais il existe un jeu positif entre la portion de contact 51.1 et la face d'actionnement FA en tout point entre le point de contact PC et le deuxième côté 52-2).

En d'autres termes, le dégagement ménagé sur la face d'actionnement FA provoque une section asymétrique du crochet 52 (ici les nervures du crochet 52 forment un H avec des ailes de longueurs différentes comme le montrent clairement les parties hachurées inégales, mais on peut prévoir d'autres formes, comme par exemple une face d'actionnement FA sans nervures, avec simplement une pente, un décrochement ou une dépouille pour former le dégagement et garantir le jeu j).

Autrement dit, en raison du dégagement, la face d'actionnement FA présente deux inclinaisons : une première pente par rapport à la direction de montage pour déformer progressivement le jonc élastique 51 lors du montage du module de sécurité, et une deuxième pente par rapport à la direction y de la figure 3, pour garantir le jeu j en tout point hors de la piste de guidage.

Dans la mise en œuvre représentée, le point de contact PC reste tout le temps du premier côté 52-1 du crochet, tout le long du montage, si bien que dans le plan yz de la figure 3, une projection de la tractoire du point de contact PC est une droite parallèle à l'axe z.

On peut aussi prévoir de former la nervure du premier côté 52-1 avec un dôme ou une arête ou au moins une surface réduite pour avoir un contact linéaire ou même ponctuel entre la portion de contact 51-1 et le crochet 52, au niveau de la face d'actionnement FA, de sorte à maîtriser la position du point de contact, et à tout le moins limiter le plus possible tout déplacement du point de contact au cours du montage vers le haut selon l'axe y, ce qui reviendrait à diminuer le bras de levier agissant sur la flexion ou déformation du jonc élastique 51 et augmenterait les efforts de montage.

En conclusion, grâce au dégagement ménagé sur la surface d'actionnement FA du crochet 52, la piste de guidage (sur laquelle se déplace le point de contact PC lors du montage du module de sécurité) procure :
- un effort de montage le plus faible possible en raison du bras de levier le plus grand possible
- une variation de l'effort de montage sans à coup ou brusque augmentation, en raison de l'absence de contact parasite qui ferait varier et/ou diminuer brusquement le bras de levier.

Comme le montre la figure 4, le dégagement ménagé sur la face d'actionnement FA garantit que la tractoire du point de contact PC :
- suit la courbe T1, située du premier côté 52-1 du crochet 52, et
- ne dévie pas en cours de montage pour se rapprocher vers le deuxième côté 52-2 pour suivre la courbe T2, et
- ne passe pas du deuxième côté 52-2 du crochet 52 à un moment donné du montage pour suivre la courbe T3.

Les courbes T2 et T3 reviennent à diminuer notablement le bras de levier qui agit pour tendre le ressort, un contact entre la portion de contact 51-1 et le crochet 52 sur ces courbes reviendrait à augmenter notablement l'effort nécessaire pour déformer le jonc élastique 51, ce qui rendrait le montage plus difficile. Avec le dégagement qui garantit que la trajectoire de contact suit la courbe T1, les efforts restent aussi faibles que possible, et ne varient pas de manière brutale.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Dispositif de retenue d'un module de sécurité (40) embarqué sur une structure de volant (100) de véhicule, comprenant :
- au moins un organe d'accrochage, tel qu'un crochet (52), solidaire de l'un du module de sécurité (40) ou de la structure de volant (100),
- au moins un organe élastique, tel qu'un jonc élastique (51), solidaire de l'autre du module de sécurité (40) ou de la structure de volant (100), et agencé pour être engagé avec l'organe d'accrochage de sorte à retenir le module de sécurité (40) sur la structure de volant (100),
l'organe élastique comprenant une portion de contact (51-1) agencée pour, lors d'un mouvement de montage du module de sécurité (40) sur la structure de volant (100), entrer en contact avec une piste de guidage agencée sur une face d'actionnement (FA) de l'organe d'accrochage située en regard de l'organe élastique,
la piste de guidage étant agencée pour déformer l'organe élastique jusqu'à une position dégagée (PD) de l'organe d'accrochage, lors du mouvement de montage effectué selon une direction de montage,
**caractérisé en ce que** la piste de guidage est agencée d'un premier côté (52-1) de l'organe d'accrochage, et **en ce que** la face d'actionnement (FA) présente au moins un dégagement agencé entre la piste de guidage et un deuxième côté (52-2) de l'organe d'accrochage,
dans lequel l'organe élastique comprend une portion déformable (51-2) reliée à la portion de contact (51-1), et dans lequel le deuxième coté et agencé entre la portion déformable (51-2) et le premier côté (52-1).

2. Dispositif de retenue selon la revendication 1, dans lequel le dégagement est défini pour laisser un jeu strictement positif entre l'organe élastique et le reste de la face d'actionnement (FA), et en particulier avec le deuxième côté (52-2) de l'organe d'accrochage lors du mouvement de montage.

3. Dispositif de retenue selon la revendication 1 ou 2, dans lequel, dans un plan de coupe, de préférence normal à la direction de montage, et selon une direction définie par un effort exercé par l'organe élastique sur l'organe d'accrochage, le premier côté (52-1) présente une première longueur, supérieure à une deuxième longueur du deuxième côté (52-2).

4. Dispositif de retenue selon l'une des revendications 1 à 3, dans lequel, dans au moins un plan de coupe, de préférence normal à la direction de montage, l'organe d'accrochage présente une section en **H,** avec une première aile du H agencée du premier côté (52-1) et une deuxième aile du H agencée du deuxième côté (52-2), la première aile présentant une première longueur supérieure à la deuxième longueur de la deuxième aile.

5. Dispositif de retenue selon l'une des revendications 1 à 4, dans lequel, lors du mouvement de montage, une distance entre la portion déformable (51-2) et le point de contact entre la piste de contact et la portion de contact (51-1) est inférieure à 40 mm.

6. Dispositif de retenue selon l'une des revendications 1 à 5, dans lequel l'organe élastique est agencé pour être déformé en flexion lors du mouvement de montage, et dans lequel la direction de flexion est normale à la direction de montage.

7. Dispositif de retenue selon l'une des revendications 1 à 6, dans lequel l'organe d'accrochage comprend deux nervures, et dans lequel la piste de guidage est formée sur une seule des deux nervures.

8. Dispositif de retenue selon l'une des revendications 1 à 7, dans lequel l'organe d'accrochage est formé en matière plastique et/ou en polymère.

9. Dispositif de retenue selon l'une des revendications 1 à 8, dans lequel l'organe d'accrochage est formé par un procédé de moulage par injection.

10. Dispositif de retenue selon l'une des revendications 1 à 9, dans lequel l'organe d'accrochage est solidaire du module de sécurité (40), et de préférence formé de manière monolithique ou d'un seul tenant avec un boîtier du module de sécurité (40).

11. Dispositif de retenue selon l'une des revendications 1 à 10, dans lequel la piste de guidage est agencé pour procurer un contact linéaire ou de préférence ponctuel avec la portion de contact (51-1).

12. Dispositif de retenue selon l'une des revendications 1 à 11, comprenant deux organes d'accrochage et un ou deux organes élastiques

13. Volant de véhicule comprenant un dispositif de retenue selon l'une des revendications 1 à 12.

14. Véhicule automobile comprenant un volant de véhicule selon la revendication 13.

## Patentansprüche

1. Haltevorrichtung eines Sicherheitsmoduls (40), das auf einer Lenkradstruktur (100) eines Fahrzeugs angebracht ist, umfassend:
- mindestens ein Befestigungselement, wie ein Haken (52), das mit einem des Sicherheitsmoduls (40) oder der Lenkradstruktur (100) fest verbunden ist,
- mindestens ein elastisches Element, wie eine elastische Stange (51), das mit dem anderen des Sicherheitsmoduls (40) oder der Lenkradstruktur (100) fest verbunden ist und zum Ineingriffkommen mit dem Befestigungselement derart angeordnet ist, dass das Sicherheitsmodul (40) an der Lenkradstruktur (100) gehalten wird,
das elastische Element, umfassend einen Kontaktabschnitt (51-1), der, während einer Bewegung zum Montieren des Sicherheitsmoduls (40) auf der Lenkradstruktur (100), zum Inkontakttreten mit einer Führungsbahn angeordnet ist, die auf einer Betätigungsfläche (FA) des Befestigungselements angeordnet ist, die dem elastischen Element gegenüberliegt,
wobei die Führungsbahn zum Verformen des elastischen Elements bis zu einer gelösten Position (PD) des Befestigungselements während der Montagebewegung, die in einer Montagerichtung ausgeführt wird, angeordnet ist,
**dadurch gekennzeichnet, dass** die Führungsbahn auf einer ersten Seite (52-1) des Befestigungselements angeordnet ist, und dadurch, dass die Betätigungsfläche (FA) mindestens eine Aussparung aufweist, die zwischen der Führungsbahn und einer zweiten Seite (52-2) des Befestigungselements angeordnet ist,
wobei das elastische Element einen verformbaren Abschnitt (51-2) umfasst, der mit dem Kontaktabschnitt (51-1) verbunden ist, und wobei die zweite Seite zwischen dem verformbaren Abschnitt (51-2) und der ersten Seite (52-1) angeordnet ist.

2. Haltevorrichtung nach Anspruch 1, wobei die Aussparung zum Freilassen eines strikt positiven Freiraums zwischen dem elastischen Element und dem Rest der Betätigungsfläche (FA) und insbesondere mit der zweiten Seite (52-2) des Befestigungselements während der Montagebewegung angeordnet ist.

3. Haltevorrichtung nach Anspruch 1 oder 2, wobei in einer Schnittebene, vorzugsweise senkrecht zu der Montagerichtung, und entlang einer Richtung, die durch eine Kraft definiert ist, die durch das elastische Element auf das Befestigungselement ausgeübt wird, die erste Seite (52-1) eine erste Länge aufweist, die größer als eine zweite Länge der zweiten Seite (52-2) ist.

4. Haltevorrichtung nach einem der Ansprüche 1 bis 3, wobei das Befestigungselement in mindestens einer Schnittebene, vorzugsweise senkrecht zu der Montagerichtung, einen H-förmigen Querschnitt aufweist, mit einem ersten Flügel des H, der auf der ersten Seite (52-1) angeordnet ist, und einem zweiten Flügel des H, der auf der zweiten Seite (52-2) angeordnet ist, wobei der erste Flügel eine erste Länge aufweist, die größer als die zweite Länge des zweiten Flügels ist.

5. Haltevorrichtung nach einem der Ansprüche 1 bis 4, wobei während der Montagebewegung ein Abstand zwischen dem verformbaren Abschnitt (51-2) und dem Kontaktpunkt zwischen der Kontaktbahn und dem Kontaktabschnitt (51-1) kleiner als 40 mm ist.

6. Haltevorrichtung nach einem der Ansprüche 1 bis 5, wobei das elastische Element zum Verformtwerden durch Biegung während der Montagebewegung angeordnet ist und wobei die Biegerichtung senkrecht zu der Montagerichtung ist.

7. Haltevorrichtung nach einem der Ansprüche 1 bis 6, wobei das Befestigungselement zwei Rippen umfasst und wobei die Führungsbahn auf nur einer der zwei Rippen ausgebildet ist.

8. Haltevorrichtung nach einem der Ansprüche 1 bis 7, wobei das Befestigungselement aus Kunststoff und/oder aus Polymer ausgebildet ist.

9. Haltevorrichtung nach einem der Ansprüche 1 bis 8, wobei das Befestigungselement durch ein Spritzgussverfahren ausgebildet ist.

10. Haltevorrichtung nach einem der Ansprüche 1 bis 9, wobei das Befestigungselement mit dem Sicherheitsmodul (40) fest verbunden ist und vorzugsweise monolithisch oder einstückig mit einem Gehäuse des Sicherheitsmoduls (40) ausgebildet ist.

11. Haltevorrichtung nach einem der Ansprüche 1 bis 10, wobei die Führungsbahn zum Bereitstellen eines linearen oder vorzugsweise punktuellen Kontakts mit dem Kontaktabschnitt (51-1) angeordnet ist.

12. Haltevorrichtung nach einem der Ansprüche 1 bis 11, umfassend zwei Befestigungselemente und ein oder zwei elastische Elemente.

13. Fahrzeuglenkrad, umfassend eine Haltevorrichtung nach einem der Ansprüche 1 bis 12.

14. Kraftfahrzeug, umfassend ein Fahrzeuglenkrad nach Anspruch 13.

## Claims

1. A device for retaining a safety module (40) mounted on a vehicle steering wheel structure (100), comprising:
- at least one latching element, such as a hook (52), rigidly connected to one of the safety module (40) and the steering wheel structure (100),
- at least one resilient element, such as a resilient rod (51), rigidly connected to the other of the safety module (40) and the steering wheel structure (100), and arranged so as to engage with the latching element in order to retain the safety module (40) on the steering wheel structure (100),
the resilient element comprising a contact portion (51-1) arranged so as, during a movement of mounting the safety module (40) on the steering wheel structure (100), to come into contact with a guide track arranged on an actuation face (FA) of the latching element, which face is located facing the resilient element,
the guide track being arranged so as to deform the resilient element to a released position (PD) of the latching element during the mounting movement carried out in a mounting direction,
**characterized in that** the guide track is arranged on a first side (52-1) of the latching element, and **in that** the actuation face (FA) has at least one clearance arranged between the guide track and a second side (52-2) of the latching element,
wherein the resilient element comprises a deformable portion (51-2) connected to the contact portion (51-1), and wherein the second side is arranged between the deformable portion (51-2) and the first side (52-1).

2. The retaining device according to claim 1, wherein the clearance is defined so as to leave a strictly positive gap between the resilient element and the rest of the actuation face (FA), and in particular with the second side (52-2) of the latching element during the mounting movement.

3. The retaining device according to claim 1 or 2, wherein, in a cutting plane, preferably normal to the mounting direction, and in a direction defined by a force exerted by the resilient element on the latching element, the first side (52-1) has a first length, greater than a second length of the second side (52-2).

4. The retaining device according to any of claims 1 to 3, wherein, in at least one cutting plane, preferably normal to the mounting direction, the latching element has an H-shaped section, with a first flange of the H arranged on the first side (52-1) and a second flange of the H arranged on the second side (52-2), the first flange having a first length greater than the second length of the second flange.

5. The retaining device according to any of claims 1 to 4, wherein, during the mounting movement, a distance between the deformable portion (51-2) and the point of contact between the contact track and the contact portion (51-1) is less than 40 mm.

6. The retaining device according to any of claims 1 to 5, wherein the resilient element is arranged so as to deform by bending during the mounting movement, and wherein the bending direction is normal to the mounting direction.

7. The retaining device according to any of claims 1 to 6, wherein the latching element comprises two ribs, and wherein the guide track is formed on only one of the two ribs.

8. The retaining device according to any of claims 1 to 7, wherein the latching element is formed of plastics material and/or polymer material.

9. The retaining device according to any of claims 1 to 8, wherein the latching element is formed by an injection molding process.

10. The retaining device according to any of claims 1 to 9, wherein the latching element is rigidly connected to the safety module (40), and preferably formed monolithically or in one piece with a housing of the safety module (40).

11. The retaining device according to any of claims 1 to 10, wherein the guide track is arranged so as to provide a linear or preferably spot contact with the contact portion (51-1).

12. The retaining device according to any of claims 1 to 11, comprising two latching elements and one or two resilient elements.

13. A vehicle steering wheel comprising a retaining device according to any of claims 1 to 12.

14. A motor vehicle comprising a vehicle steering wheel according to claim 13.
